# EUROPÄISCHE PATENTANMELDUNG

(11) **EP 0 714 722 A1**
(43) Veröffentlichungstag der Anmeldung: **05.06.1996**
(21) Anmeldenummer: 95117403.6
(22) Anmeldetag: 06.11.1995
(51) Int. Cl.: B23K 11/06

(54) **Führungsschiene, insbesondere eine Z-Schiene für eine Widerstandsschweissmaschine**

(30) Priorität: 28.11.1994 CH 3579/94; 12.01.1995 CH 87/95
(71) Anmelder: ELPATRONIC AG, CH-6303 Zug (CH)
(72) Erfinder: Baumgartner, Michael, CH-8436 Rekingen (CH); Levy, Gideon, CH-6644 Orselina (CH)

(57) **Zusammenfassung**

Eine Führungsschiene (8) zum Zuführen von Zargen zu einer Schweissstelle (1) einer Widerstandsschweissmaschine ist auf einem den Schweissstrom leitenden, systemgekühlten Unterarm (5) angeordnet und von diesem durch eine Isolationsschicht (16) elektrisch isoliert. Obwohl die Führungsschiene (8) selber nicht einen Teil des Stromkreises bildet, wird sie durch Wirbelströme stark erwärmt. Zu einer effizienten Kühlung wird für die Isolationsschicht (16) ein thermisch gut leitendes Material, vorzugsweise Keramik, verwendet, das es erlaubt, die Wärme von der Führungsschiene (8) in den gekühlten Unterarm (5) abzuleiten. Die betriebsmässig stark beanspruchte und dadurch mit der Zeit an Qualität verlierende Isolationsschicht (16) ist mit der Führungsschiene (8) zusammen am Unterarm (5) befestigbar und kann in einfacher Weise beim regelmässigen Wechsel der Führungsschiene (8) ersetzt werden, womit sowohl eine einwandfreie elektrische Isolation, als auch eine effiziente Wärmeableitung von der Führungsschiene (8) gewährleistet wird.

## Beschreibung

Die Erfindung betrifft eine Führungsschiene, insbesondere Z-Schiene zum Führen miteinander zu verschweissender Blechkanten zu einer Schweissstelle einer Widerstandsschweissmaschine hin, welche auf einem stromdurchflossenen Organ der Widerstandsschweissmaschine angeordnet ist. Bei bekannten Widerstandsschweissmaschinen für Dosenzargen werden einzelne Bleche im Abstapler vereinzelt und einem Rundapparat zugeführt. Dort werden die Bleche zur Dosenzarge gerundet; die miteinander zu verschweissenden Blechkanten liegen sich gegenüber und befinden sich in einer Führungsschiene, welche die Blechkanten beim nachfolgenden Transport zur Schweissstelle fuhren und auf dem Weg zur Schweissstelle hin in genaue Schweissposition bringen. Die Führungsschiene besitzt für jede zu führende Blechkante eine Nut, in welcher diese Kante läuft. Im Bereich des Rundapparats kann die Führungsschiene im Querschnitt als liegendes H ausgebildet sein; Blechkanten befinden sich dann auf gleicher Höhe und sind durch den Steg des H voneinander getrennt. Im Schweissbereich müssen sich die Blechkanten etwas überlappen, womit sich die Notwendigkeit ergibt, dass die Führungsschiene im Schweissbereich einen z-förmigen (oder s-förmigen) Querschnitt angenommen hat, so dass die Kanten übereinander positioniert werden.

Die Schweissstelle wird durch zwei übereinanderliegende Elektrodenrollen gebildet, zwischen welchen die sich überlappenden Blechkanten hindurchgeführt werden. Die Verschweissung erfolgt durch den Stromdurchgang von Rolle zu Rolle, das heisst durch den Stromdurchgang durch die Ueberlappungsstelle der Blechkanten hindurch. Die untere Schweissrolle ist an einem Schweissarm gelagert, auf welchem wiederum die Z-(oder H-)Schiene angeordnet ist. So ist es z.B. möglich, das Dosenblech um den unteren Schweissarm herum zu runden, worauf es nach beendeter Rundung durch die Z-(oder H-)Schiene gehalten wird und dann gegen die Schweissstelle hin zu transportieren.

Der Schweissstrom (Wechselstrom) muss nun ebenfalls durch den Unterarm fliessen, da die untere Schweissrolle auf ihm angeordnet ist und der Schweissstrom hinter der Schweissstelle, da die Zarge dort zu einem Rohr verschweisst ist, nicht mehr abgenommen werden kann.

Um einen Kurzschluss des Schweissstroms über die Dosenzarge und Z-Schiene in den Schweissarm, das heisst unter Umgehung der Schweissstelle, zu verhüten, muss die Z-Schiene isoliert werden.

Weiter bildet der Weg des Stroms vom Schweisstransformator in den Unterarm, von der unteren zur oberen Schweissstelle, und von dort zurück zum Schweisstransformator einen Weg, welcher einer geschlossenen Leiterschleife, das heisst einer Spule mit einer einzigen Windung entspricht. Wegen der hohen Schweissströme bis zu 8'000 A und der hohen Frequenz bis zu 1'000 Hz sind erhebliche Magnetfelder die Folge, welche wiederum durch Wirbelströme den Schweissarm sowie die isolierte Z-Schiene aufheizen. Dies macht es notwendig, den Unterarm durch ein Kühlmedium zu kühlen. Da die Z-Schiene vom Unterarm elektrisch isoliert werden muss und auch elektrisch isolierende, aber thermisch leitende Schichten den ungehinderten Wärmeabfluss von der Z-Schiene in den gekühlten Unterarm behindern, heizt sich die Z-Schiene im Betrieb der Schweissmaschine erheblich auf.

Um diese Wärmeproblematik zu vermindern, aber auch um den Wirkungsgrad der Maschine gleichzeitig zu erhöhen, zeigt CH-PS 671 902 eine Anordnung, wo die Fläche, die durch die Leiterschleife zwischen Schweisstransformator und Schweissrollen gebildet wird, vermindert und damit die Aufheizung erheblich gesenkt ist. Dennoch sind im Betrieb der Schweissmaschine Wirbelströme in der Z-Schiene und eine entsprechende Aufheizung durch Wärmestau aufgrund der Isolationsschicht gegenüber dem gekühlten Schweissunterarm nicht zu verhindern.

Sowohl die Z-Schiene als auch die Isolationsschicht sind starker mechanischer Beanspruchung ausgesetzt. Die Verschmutzung der Maschine durch Schmieröl, Metallablagerungen (Abrieb) und sonstige Schmutzpartikel, aber auch Reiningungsmittel wie z.B. Aceton lassen die Isolationsschicht altern oder führen zu einer Brückenbildung zwischen den elektrisch zu isolierenden Teilen. Letzteres geschieht insbesondere durch Schmutzablagerungen in den Ecken zwischen der Z-Schiene und dem Unterarm, so dass sich ein Funkensprung bildet, welcher die Funktion verschiedener, mit der Schweissmaschine in Betrieb stehender elektronischer Nebenaggregate beeinträchtigt. Eine vermehrte Reinigung ist zeitaufwendig, da die entsprechenden Organe konstruktiv ineinandergeschachtelt und damit schwer zugänglich sind. Weiter führt vermehrte Reinigung dazu, dass die Isolationsschicht durch den Gebrauch der Reinigungsmittel vorzeitig altert, so dass sie ihre Isolationsfähigkeit verliert.

Sobald der Funkensprung zu intensiv wird, verliert die Schweissstelle zuviel Strom und werden die Nebenaggregate, wie die elektronische Steuerung der Schweissmaschine empfindlich gestört, so dass es sich aufdrängt, den Unterarm auszubauen und mit einer neuen Isolationsschicht versehen zu lassen.

Dies bedeutet den entsprechenden stundenlangen Stillstand der Schweisslinie, welche bis zu 1'000 Dosen in der Minute produziert.

Entsprechend drängt es sich für den Fachmann auf, die Isolationsschicht dicker auszubilden, so dass sie dem vorzeitigen Verschleiss oder der vorzeitigen Alterung länger widersteht. Dies wiederum führt dazu, dass die thermische Leitfähigkeit sinkt, was durch den Dauerbetrieb der Schweissmaschine zur Folge hat, dass sich die Z-Schiene aufheizt, in Extremfällen bis auf einige hundert Grad C aufheizt, was unerwünscht ist und die präzise Führung der Dosenkanten beeinträchtigt.

Entsprechend ist es unumgänglich, auch die Z-Schiene an der Kühlung der Maschine anzuschliessen. Dies ist aufwendig, da die Z-Schiene einem räumlich beengten Ort an der Schweissmaschine angeordnet ist, wo zusätzliche Kühlleitungsanschlüsse an sich problematisch sind. Weiter besitzt die Z-Schiene, mindestens gegen die Schweissstelle hin, kleinere Dimensionen, was spezielle Ansprüche an die Kühlung überhaupt stellt.

Der vorliegenden Erfindung liegt die Aufgabe zugrunde, die oben genannten Nachteile zu beseitigen und eine genügende Kühlung der Z-Schiene zu ermöglichen, ohne dass der Nachteil der mangelhaften elektrischen Isolation in Kauf genommen werden muss. Diese Aufgabe wird erfindungsgemäss durch die im Kennzeichen des Anspruchs 1 angegebenen Merkmale gelöst.

Dadurch, dass die Isolationsschicht an der Führungsschiene angebracht ist, kann sie mit der Führungsschiene zusammen ersetzt werden. Tritt ein Funkensprung auf, welcher eine mangelhafte elektrische Isolation anzeigt, lässt sich einfach die Führungsschiene austauschen, um das Problem zu beheben. Entsprechend lässt sich die Isolationsschicht sehr dünn ausbilden: deren Lebensdauer muss nur noch der Lebensdauer der als Verschleissteil ausgebildeten Führungsschiene entsprechen und nicht mehr die Lebensdauer des Schweissarms, das heisst die Lebensdauer der Maschine selbst, erreichen. Zugleich lässt sich die Isolationsschicht auch für diese völlig andern und günstigeren Verhältnisse knapp dimensionieren, da bei vorzeitiger Alterung das Verschleissteil Führungsschiene vorzeitig ersetzt werden kann, was nicht so schwer wiegt, da dessen Lebensdauer im wesentlichen schon vorbei ist. Dadurch, dass die auf der Führungsschiene aufgebrachte Isolationsschicht mindestens die Kontaktfläche zwischen Führungsschiene und Schweissarm überdeckt, besteht die Freiheit, auch die an die Kontaktfläche angrenzenden Gebiete mit einer Isolationsschicht zu versehen, so dass die elektrische Brückenbildung durch ein Gemisch aus Schmutz und Metallabrieb wirksam unterbunden werden kann.

Würde solch eine angrenzende, zusätzliche Isolationsschicht auf dem Unterarm angebracht, könnte diese nicht während der ganzen Lebensdauer des Unterarms Bestand haben, da sie vorzeitig durch den Alterungsprozess zerstört würde. Wiederum wäre der Unterarm auszubauen, das heisst die Schweisslinie stillzulegen, um die Isolationsschicht auszubessern.

Schweissmaschinen der genannten Art werden oft bis zu 20 Jahre im Mehrschichtbetrieb gefahren, ohne dass grössere Umbauten vorzunehmen sind. Über die gestellte Aufgabe hinaus hat daher die erfindungsgemäss an der Führungsschiene angebrachte Isolationsschicht den Vorteil, dass die Isolationsschicht, durch den Wechsel der Führungsschiene jederzeit der technologischen Entwicklung angepasst werden kann. Dies ist darum von Bedeutung, weil einerseits die keramischen Materialien (elektrische Isolation, thermische Leitung) und andererseits die elektronischen Hilfsmittel (Steuerung, Überwachung der Qualität der Schweissnaht direkt an der Schweissstelle, Erhöhung der Schweissstromfrequenz durch erheblich erhöhte Schweissgeschwindigkeiten, etc.) gegenwärtig in voller Entwicklung sind.

Die bisherigen Ausführungen sind auf eine Widerstandsschweissmaschine zum Schweissen von Dosenzargen bezogen.

Beim Platinenschweissen ist die Problematik jedoch analog; die Ausführungen sowie die vorliegende Erfindung beziehen sich deshalb auch auf das Verschweissen von Platinen. Platinen sind ebene Blechtafeln, welche entlang ihrer aneinanderliegenden Kanten verschweisst werden. Der Schweissprozess ist, abgesehen von der grösseren Dicke der Platinen, der selbe wie beim Dosenschweissen.

Die Erfindung wird anhand eines in der Zeichnung dargestellten Ausführungsbeispiels näher erläutert.

Es zeigt:
Fig. 1 schematisch die relevanten Organe einer bekannten Widerstandsschweissmaschine für das Dosenschweissen; und
Fig. 2 Führungsschienen mit einer Isolationsschicht gemäss der vorliegenden Erfindung.

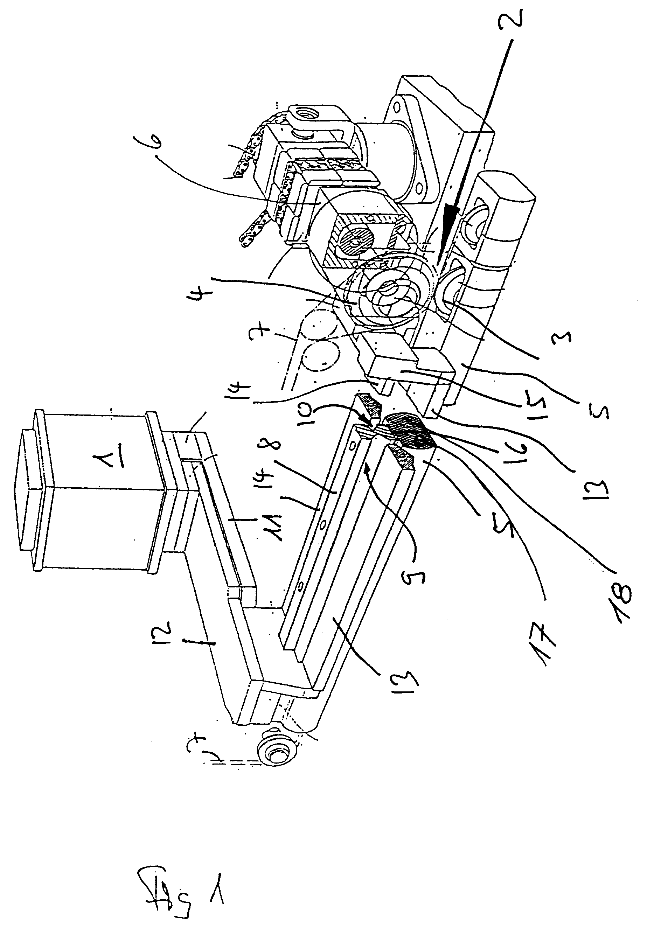

Fig. 1 zeigt die relevanten Organe einer bekannten Dosenschweissmaschine und ist der CH-PS 671 902, entsprechend US-PS 4,803,325, entnommen. Die dort dargestellte Schweissmaschine entspricht dem fortschrittlichsten Stand der Technik im Hinblick auf das der Erfindung zugrundeliegende Problem der unerwünschten Aufheizung von Maschinenteilen durch eine vom Schweisstransformator mit Wechselstrom gespiesene Leiterschleife in der Maschine.

Fig. 1 zeigt die von einem Schweisstransformator 1 gespiesene Leiterschleife 2 für den Schweissstrom, welche der Stromversorgung der Schweissstelle 2, gebildet durch eine obere Schweissrolle 3 und eine untere Schweissrolle 4, dient.

Die untere Schweissrolle 4 ist in einem Schweissarm 5 gelagert, welcher sich nach hinten erstreckt und zur Darstellung der Querschnittsverhältnisse unterbrochen gezeichnet dargestellt ist.

Die obere Schweissrolle 3 ist an einem an sich bekannten Pendelarm 6 gelagert.

Gestrichelt angedeutet ist der Verlauf des Schweissdrahtes 7, welcher konventionell an Schweissmaschinen dieser Gattung vorgesehen ist und mit der vorliegenden Erfindung nicht in Beziehung steht.

Weiter dargestellt ist eine Z-Schiene 8 mit Nuten 9 und 10, ausgebildet für die Aufnahme der Blechkanten einer um den Schweissarm 5 herum gerundeten Dosenzarge.

Der Schweissarm 5 steht über dem Leiter 11 mit dem Schweisstransformator in Verbindung; ein Leiter 12 erstreckt sich parallel und gegenüber dem Leiter 11 isoliert, gegen den Schweissarm 5 hin und steht mit zwei parallelen Leiterabschnitten 13 und 14 in Verbindung. Die Abschnitte 13 und 14 werden über eine Brücke 15 vereinigt; diese wiederum stellt den elektrisch leitenden Anschluss an den Pendelarm 6 sicher.

Damit ergibt sich ein Wechselstromkreis wie folgt: Ausgehend vom Schweisstransformator 1 fliesst der Strom über den Leiter 11 zum Schweissarm 5, dort in die untere Schweissrolle 3, durch die für den Schweissvorgang sich zwischen den Schweissrollen befindenden, aufeinanderliegenden Dosenkanten einer zu schweissenden Zarge hindurch in die obere Schweissrolle 4, von dort in den Pendelarm 6, zur Brücke 15 und über die parallelen Leiterabschnitte 13, 14 in den Leiter 12 und zurück zum Transformator 1.

Die Z-Schiene 8 besitzt eine Isolationsschicht 16.

Bohrungen 17, 18 dienen dem Durchfluss eines Kühlmediums für den unteren Schweissarm 5.

Zur Entlastung der Figur weggelassen sind ein zu einer Maschine dieser Gattung gehörender Rundapparat, welcher die einzelnen Dosenbleche rundet und in eine Position bringt, wo sie mit ihren beiden gegenüberliegenden Kanten in die Nuten 9, 10 der Z-Schiene 8 eingreifen. Ebenso ist nicht dargestellt ein Kühlaggregat für das nach dem Durchlauf durch die Bohrungen 17, 18 erwärmte Kühlmittel, welches im Schweissarm anfallende Wärme abtransportiert. Weiter nicht dargestellt ist eine Transportvorrichtung, welche die gerundete und in der Z-Schiene liegende Zarge nach vorne zur Schweissstelle, gebildet durch die Schweissrollen 3, 4 transportiert. Ebenfalls nicht dargestellt ist ein weiterer Transport, welcher die frisch geschweissten Zargen erfasst und von der Schweissstelle 2 wegtransportiert.

Die Z-Schiene 8 erstreckt sich bis unmittelbar vor die Schweissstelle 2, da eine präzise Führung der Zargenkanten bis unmittelbar vor die Schweissstelle 2 unumgänglich ist.

Im Betrieb der Maschine werden die durch die Schweissstelle 2 hindurchgeführten Zargenkanten miteinander verschweisst, indem der Schweissstrom mit einer von der Schweissgeschwindigkeit abhängigen Frequenz zwischen der oberen Schweissrolle 3 und der unteren Schweissrolle 4 hin und her fliesst, dabei durch die dazwischenliegenden und aufeinandergepressten Blechkanten hindurchfliesst und diese so miteinander verschweisst. Dazu werden Ströme bis zu 8'000 A benötigt; ein beträchtliches Magnetfeld im Bereich der Z-Schiene ist die Folge. Diese Magnetfelder werden im Schweissarm Wirbelströme induziert, welche diesen Aufheizen. Ebenso heizt sich die Z-Schiene auf. Die Isolationsschicht 16, obwohl thermisch leitend, behindert den Wärmeabfluss aus der Z-Schiene zu den Bohrungen 17, 18 im Schweissarm 5. Da jedoch die Isolationsschicht gegenüber einer solchen aus dem Stand der Technik entscheidend dünner gehalten ist, kann der Wärmestau nicht mehr ein Mass erreichen, wo sich die Z-Schiene um einige hundert Grad C aufheizt.

Sobald sich eine zu verschweissende Zarge mit dem vorderen Ende zwischen den Schweissrollen befindet, wirkt sie als Leiter, durch welchen der Schweissstrom hindurch fliessen kann. Ebenso die Z-Schiene, welche aus Verschleissgründen in der Regel aus Hartmetall besteht, damit elektrisch leitend ist und über die Zarge mit den Elektrodenrollen 3, 4 leitend verbunden ist. Besteht nun ein Fehler in der Isolation zwischen der Z-Schiene 8 und dem Schweissarm 5 ergibt sich ein Kurzschlusspfad für den Schweissstrom, mit der Folge, dass sich der in der Schweissstelle 2 fliessende Stromfluss vermindert und durch den Kurzschluss entstehende Funken die Elektronik der Maschine stören.

Dadurch, dass die dünne Isolationsschicht 16 unverletzt bleibt, wird dieser Kurzschlusspfad für den Schweissstrom vermieden.

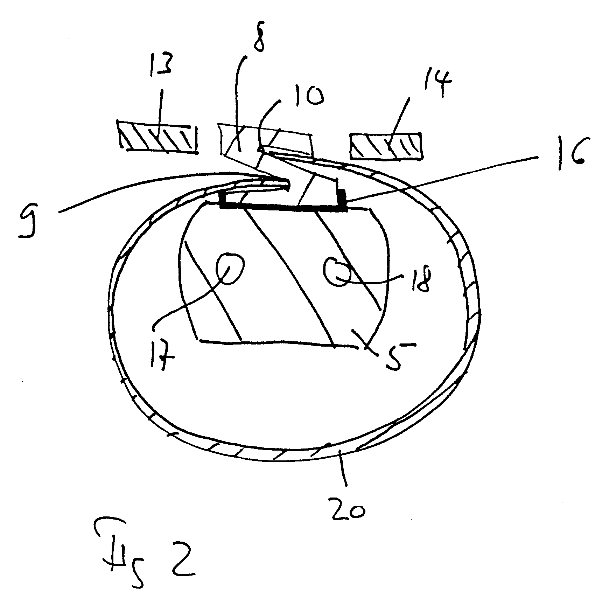

Fig. 2 zeigt einen Querschnitt durch den Schweissarm 5, die Z-Schiene 8 und die Leiterabschnitte 13, 14 am Ort, wo in Fig. 1 diese Elemente durchbrochen dargestellt sind. Fig. 2 enthält gegenüber Fig. 1 zusätzlich die Darstellung einer zu verschweissenden Zarge (ebenfalls im Querschnitt), welche in der Z-Schiene (oder S-Schiene) läuft und gegen die Schweissstelle 2 transportiert wird. Dargestellt ist die Isolationsschicht 16, die die Kontaktfläche zwischen Z-Schiene 8 und Schweissarm 5 bedeckt, und weiter seitlich am Fuss der Z-Schiene hochläuft, obschon dort kein Kontakt mehr besteht zum Schweissarm 5. Dadurch wird in einem Gebiet, wo durch insbesondere den Abrieb der Z-Schiene sich leitender Schmutz ansammeln kann, eine Brückenbildung wirksam unterbunden.

## Patentansprüche

1. Führungsschiene, insbesondere Z-Schiene, zum Führen miteinander zu verschweissender Blechkanten zu einer Schweissstelle einer Widerstandsschweissmaschine hin, welche auf einem stromdurchflossenen Organ der Widerstandsschweissmaschine angeordnet ist, dadurch gekennzeichnet, dass die Führungsschiene eine Isolationsschicht aufweist, welche mindestens den Kontaktbereich der Führungsschiene mit dem Organ überdeckt und elektrisch isolierendes, aber thermisch leitendes Material aufweist.

2. Führungsschiene nach Anspruch 1, dadurch gekennzeichnet, dass die Isolationsschicht lösbar mit der Führungsschiene verbunden ist.

3. Führungsschiene nach Anspruch 1, dadurch gekennzeichnet, dass die Isolationsschicht als Bestandteil der Führungsschiene ausgebildet ist und mit dieser als Compound vergossen ist.

4. Führungsschiene nach Anspruch 1, dadurch gekennzeichnet, dass die Isolationsschicht als Bestandteil der Führungsschiene ausgebildet ist und auf dieser aufgespritzt ist.

5. Führungsschiene nach einem der vorangehenden Ansprüche 1 bis 4, dadurch gekennzeichnet, dass die Isolationsschicht keramisches Material, beispielsweise Aluoxyd Al2 O3, Siliciumnitrid Si 3N4, oder Siliciumcarbid SiC oder eine Kombination dieser Stoffe enthält.

6. Führungsschiene nach einem der vorangehenden Ansprüche 1 bis 5, dadurch gekennzeichnet, dass die Isolationsschicht aus keramischem Material kombiniert mit Kunststoff hergestellt ist.

7. Führungsschiene nach einem der vorangehenden Ansprüche 1 bis 6, dadurch gekennzeichnet, dass an den Kontaktbereich angrenzende Flächen mit der Isolationsschicht bedeckt sind.

8. Widerstandsschweissmaschine, insbesondere zum Schweissen von Dosenzargen, gekennzeichnet durch die Führungsschiene nach einem der vorangehenden Ansprüche.
